# EUROPEAN PATENT APPLICATION

(11) **EP 4 167 450 A1**
(43) Date of publication of application: **19.04.2023**
(21) Application number: 21821536.6
(22) Date of filing: 09.06.2021
(51) Int. Cl.: H02K 9/02

(54) **ELECTRIC MOTOR**

(30) Priority: 10.06.2020 JP 2020101141
(71) Applicant: Daikin Industries, Ltd., Osaka-shi, Osaka 530-8323 (JP)
(72) Inventor: SAKURAGI, Takuya, Osaka-shi, Osaka 530-8323 (JP); MIWA, Daiki, Osaka-shi, Osaka 530-8323 (JP); YASUDA, Yoshiki, Osaka-shi, Osaka 530-8323 (JP); YAMAGIWA, Akio, Osaka-shi, Osaka 530-8323 (JP); HIBINO, Hiroshi, Osaka-shi, Osaka 530-8323 (JP)
(74) Representative: Hoffmann Eitle
(86) International application number: PCT/JP2021/022000
(87) International publication number: WO 2021/251442

(57) **Abstract**

A technique that can prevent an increase in size of an electric motor is provided. According to an embodiment of the present disclosure, an electric motor 400 includes a rotor 10, a stator 20, a through-hole 14A, and an inflow path (such as a gap 36 or a through-hole 38). The rotor 10 is configured to be rotatable about a rotation axis AX, and a turbofan 300 is fixed to the rotor 10. The stator 20 is disposed inward of the rotor 10 and includes claw pole stator units 21. Each of the claw pole stator units 21 includes a winding 212 that is wound in an annular shape around the rotation axis AX and a stator core 211 that surrounds the winding 212. The through-hole 14A is provided in one end portion of the rotor 10 so as to penetrate from the inside to the outside of the rotor 10. The stator 20 is provided in the inside and the turbofan 300 is fixed to the outside of the rotor 10. The inflow path is configured to cause a surrounding fluid to flow into the inside of a stator unit 21C provided at one other end portion opposite to the one end portion in an axial direction.

## Description

### TECHNICAL FIELD

The present disclosure relates to an electric motor.

### BACKGROUND ART

For example, an electric motor that drives a fluid drive unit such as a fan may include a heat sink (see Patent Document 1).

### [RELATED-ART DOCUMENTS]

### [PATENT DOCUMENTS]

Patent Document 1: Japanese Laid-open Patent Publication No. 2008-207645

### SUMMARY OF THE INVENTION

### PROBLEM TO BE SOLVED BY THE INVENTION

However, if the electric motor includes the heat sink, the size of the electric motor may be increased.

The present disclosure has an object to provide a technique that can prevent an increase in size of an electric motor.

### MEANS TO SOLVE THE PROBLEM

An embodiment of the present disclosure provides an electric motor including:
a rotor configured to be rotatable about a rotation axis and to which a fluid drive unit is fixed;
a stator that is disposed inward of the rotor and includes claw pole stator units, the claw pole stator units each including a winding that is wound in an annular shape around the rotation axis and an iron core that surrounds the winding;
a hole that is provided in one end portion of the rotor so as to penetrate from inside to outside of the rotor, the stator being provided in the inside and the fluid drive unit being fixed to the outside; and
an inflow path configured to cause a surrounding fluid to flow into inside of a stator unit, the stator unit being provided at one other end portion opposite to the one end portion in an axial direction.

According to the embodiment, air can flow through the inflow path into the inside of the stator unit provided at the one other end portion, and flow out through the hole provided in the one end portion. Accordingly, the winding can be cooled by creating the flow of air inside the stator units, each including the winding therein, from the other end portion to one end portion of the stator disposed inward of the rotor.

In the above-described embodiment, the fluid drive unit may have a through-hole that penetrates from a front surface to a back surface thereof, the back surface being fixed to the stator, and
the hole may be in communication with the through-hole.

Further, in the above-described embodiment, the electric motor may further include a support member configured to support the stator at the one other end portion in the axial direction,
wherein the inflow path may include a gap between the rotor and the support member.

Further, in the above-described embodiment, the electric motor may further include a support member configured to support the stator at the one other end portion in the axial direction,
wherein the inflow path may include a through-hole provided in the support member.

Further, in the above-described embodiment, the iron core may have a through-hole extending axially through the iron core and overlapping at least a portion of the winding in an axial view.

Further, in the above-described embodiment, the through-hole of the iron core may be provided such that an opening of the through-hole extends substantially radially and a circumferential length of the opening is relatively smaller than a radial length of the opening.

Further, in the above-described embodiment, the electric motor may further include a resistance member configured to relatively increase flow path resistance of a radially outer end portion of the stator.

### EFFECTS OF THE INVENTION

According to the above-described embodiment, a technique that can prevent an increase in size of an electric motor can be provided.

### BRIEF DESCRIPTION OF THE DRAWINGS

[FIG. 1] FIG. 1 is a vertical cross-sectional view schematically illustrating an example of an indoor unit of an air conditioner including an electric motor according to a first embodiment;
[FIG. 2] FIG. 2 is a perspective view schematically illustrating an example of an electric motor according to the embodiment;
[FIG. 3] FIG. 3 is a perspective view illustrating an example configuration of a stator according to the embodiment;
[FIG. 4] FIG. 4 is an exploded view illustrating an example configuration of a stator unit according to the embodiment;
[FIG. 5] FIG. 5 is an exploded view illustrating another example configuration of the stator unit according to the embodiment;
[FIG. 6] FIG. 6 is a perspective view of a vertical cross-section illustrating an example of an internal structure of the electric motor according to the embodiment;
[FIG. 7] FIG. 7 is a vertical cross-sectional view schematically illustrating an example of the air conditioner including an electric motor according to a second embodiment;
[FIG. 8] FIG. 8 is a vertical cross-sectional view schematically illustrating an example of the air conditioner including an electric motor according to a third embodiment;
[FIG. 9] FIG. 9 is a horizontal cross-sectional view illustrating an example of an electric motor according to a fourth embodiment;
[FIG. 10] FIG. 10 is a horizontal cross-sectional view illustrating an example of an electric motor according to a fifth embodiment;
[FIG. 11] FIG. 11 is a vertical cross-sectional view of an example of an electric motor according to another embodiment; and
[FIG. 12] FIG. 12 is a vertical cross-sectional view of an example of an electric motor according to another embodiment.

### MODE FOR CARRYING OUT THE INVENTION

In the following, embodiments will be described with reference to the accompanying drawings.

### [First Embodiment]

### A first embodiment will be described. <Overview of Indoor Unit of Air Conditioner>

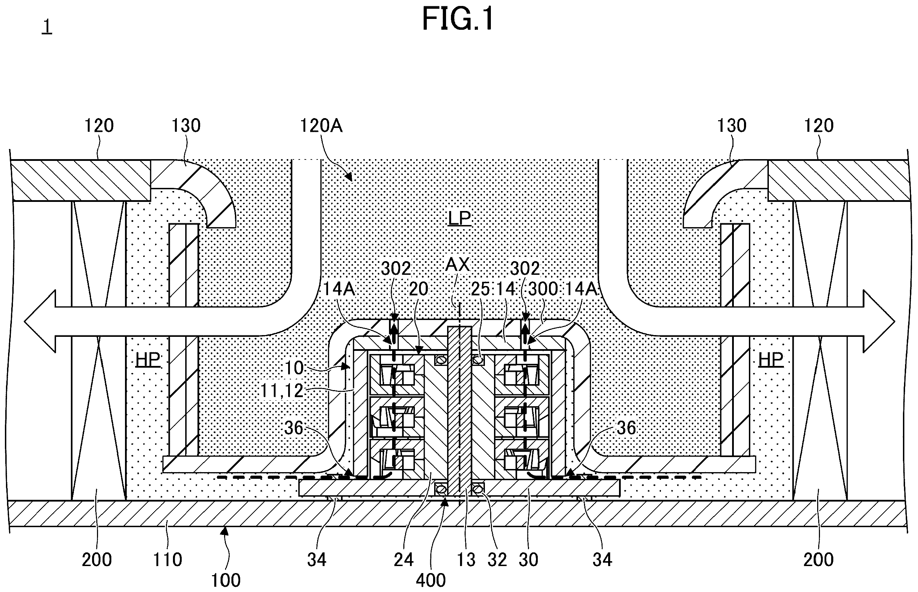

First, an indoor unit 1 of an air conditioner including an electric motor 400 according to the first embodiment will be described with reference to FIG. 1.

FIG. 1 is a vertical cross-sectional view of an example of the indoor unit 1 of the air conditioner including the electric motor 400 according to the first embodiment.

As illustrated in FIG. 1, the indoor unit 1 of the air conditioner includes a housing 100, a heat exchanger 200, a turbofan 300, and an electric motor 400. The indoor unit 1 of the air conditioner is, for example, embedded in the ceiling inside a building in a state of being upside-down from the state of FIG. 1.

The housing 100 houses the heat exchanger 200, the turbofan 300, the electric motor 400, and the like. The housing 100 includes a bottom plate 110, a top plate 120, and a bell mouth 130. The top plate 120 is provided with an opening 120A through which air is drawn from the outside, and the bell mouse 130 is disposed at the outer edge of the opening 120A.

The heat exchanger 200 exchanges heat with air passing therethrough by the rotation of the turbofan 300 so as to cool or warm the air. The heat exchanger 200 is provided adjacent to the outer peripheral side of the turbofan 300 with a rotation axis AX as the center, and is sandwiched between the bottom plate 110 and the top plate 120.

The turbofan 300 (an example of a fluid drive unit) causes air, drawn into the interior of the housing 100 through the opening 120A, to pass through the heat exchanger 200. As the turbofan 300 is rotatably driven, a relatively low air pressure space (hereinafter referred to as a "low-pressure space") LP is formed upstream of the turbofan 300, and a relatively high air pressure space (hereinafter referred to as a "high-pressure space") is formed downstream of the turbofan 300. The turbofan 300 is attached to a rotor 10 of the electric motor 400. The turbofan 300 is attached, via the electric motor 400, to a portion of the bottom plate 110 exposed through the opening 120A when the housing 100 alone is viewed. The turbofan 300 has a recess projecting toward the opening 120A with the rotation axis AX as the center, and the electric motor 400 is housed in the recess.

The electric motor 400 rotatably drives the turbofan 300. A fixing member 30 is fixed to the bottom plate 110 by bolts 34, such that the electric motor 400 is fixed to a portion of the bottom plate 110 exposed through the opening 120A when the housing 100 alone is viewed.

### <Basic Configuration of Electric Motor>

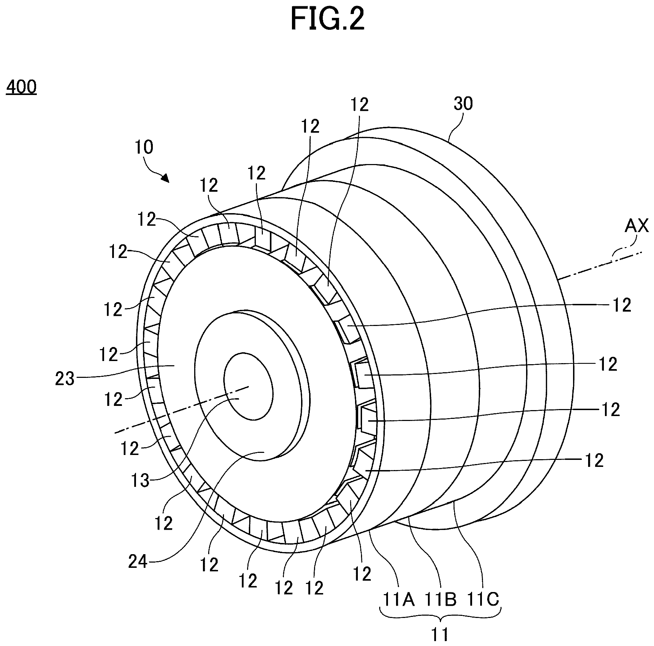

Next, a basic configuration of the electric motor 400 according to the present embodiment will be described with reference to FIG. 2 through FIG. 5 in addition to FIG. 1.

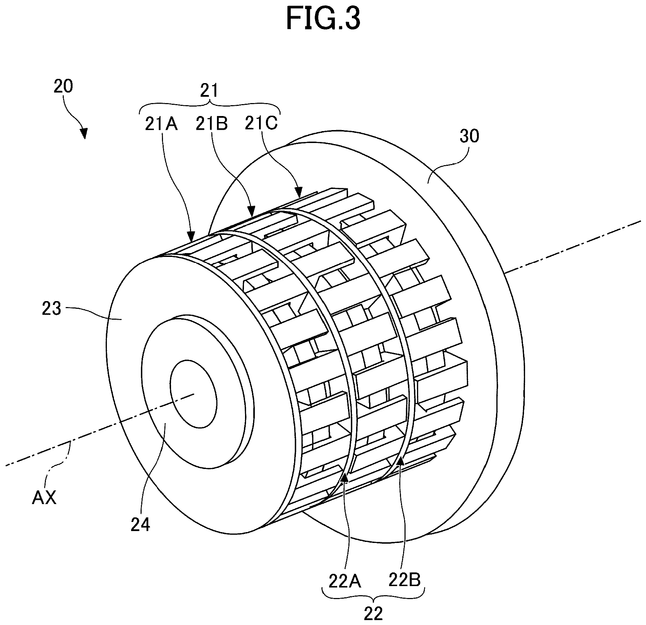

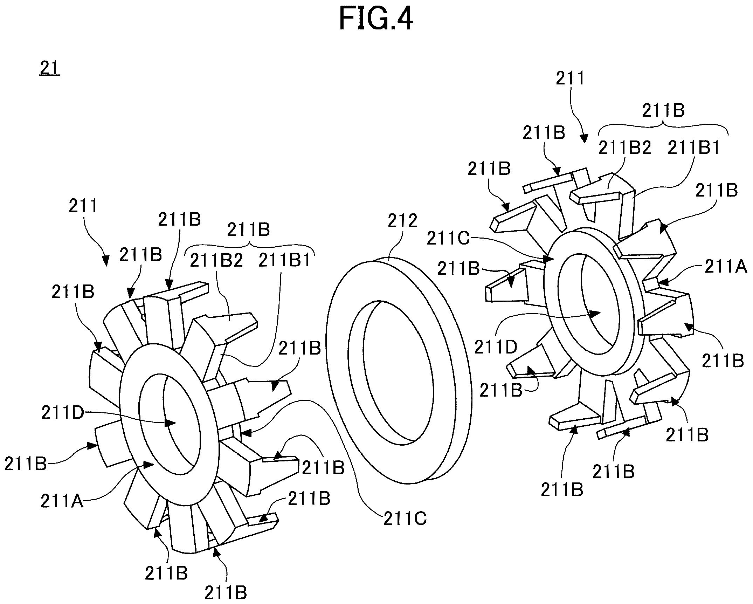

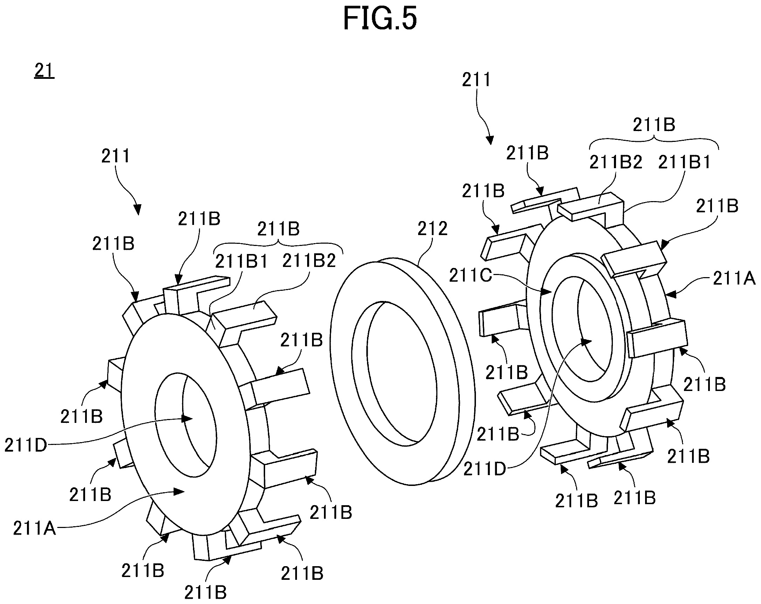

FIG. 2 is a perspective view illustrating an overview of an example of the electric motor 400 according to the present embodiment. FIG. 3 is a perspective view illustrating an example configuration of a stator 20 according to the present embodiment. Specifically, in FIG. 3, the rotor 10 (a rotor core 11, permanent magnets 12, and a rotary shaft member 13) of FIG. 2 is not depicted. FIG. 4 is an exploded view illustrating an example configuration of a stator unit 21 according to the present embodiment. FIG. 5 is an exploded view illustrating another example configuration of the stator unit 21 according to the present embodiment.

Note that a coupling member 14 of FIG. 1 is not depicted in FIG. 2.

As illustrated in FIG. 1 and FIG. 2, the electric motor 400 is of an outer rotor type, and is driven in accordance with armature currents of a plurality of phases (in this example, three phases).

The electric motor 400 includes the rotor 10, the stator 20, and the fixing member 30.

As illustrated in FIG. 2, the rotor (also referred to as a "rotor") 10 is disposed outward in a radial direction of the electric motor 400 (hereinafter also simply referred to as a "radial direction") with respect to the stator 20. The rotor 10 is configured to be rotatable about the rotation axis AX. The rotor 10 includes the rotor core 11, the plurality of (in this example, 20) permanent magnets 12, the rotary shaft member 13, and the coupling member 14.

The rotor core (also referred to as a "rotor core") 11 has, for example, a substantially cylindrical shape and is disposed such that the rotation axis AX of the electric motor 400 substantially coincides with the axis of the cylindrical shape. The rotor core 11 has substantially the same length as the stator 20 in an axial direction of the electric motor 400 (hereinafter also simply referred to as an "axial direction"). The rotor core 11 may be formed of, for example, a steel plate, cast iron, a magnetic powder core, or the like. The rotor core 11 may be comprised of, for example, one member in the axial direction. Further, as illustrated in FIG. 1, the rotor core 11 may be configured to include a plurality of (in this example, three) rotor cores 11A through 11C that are stacked in the axial direction.

The plurality of (in this example, 20) permanent magnets 12 are arranged on the inner circumferential surface of the rotor core 11 at equal intervals in the circumferential direction. The permanent magnets 12 are arranged so as to be substantially present between one end and the other end of the rotor core 11. The permanent magnets 12 are, for example, neodymium sintered magnets or ferrite magnets.

Both ends of each of the permanent magnets 12 in the radial direction are magnetized to different magnetic poles. From among the plurality of permanent magnets 12, the inner sides, facing the stator 20 in the radial direction, of two permanent magnets 12 that are adjacent to each other in the circumferential direction are magnetized to different magnetic poles. With this configuration, on the outer side of the stator 20 in the radial direction, permanent magnets 12 whose inner sides in the radial direction are magnetized to N-poles and permanent magnets 12 whose inner sides in the radial direction are magnetized to S-poles are alternately arranged in the circumferential direction.

Each of the permanent magnets 12 may be comprised of one magnet member in the axial direction. Alternatively, each of the permanent magnets 12 may be comprised of a plurality of magnet members that are arranged in the axial direction (for example, three magnet members that correspond to the stacked members of the rotor core 11). In this case, the inner sides, facing the stator 20 in the radial direction, of a plurality of magnet members, which constitute a corresponding permanent magnet 12 and are arranged in the axial direction, are all magnetized to the same magnetic pole.

As illustrated in FIG. 1, the plurality of permanent magnets 12 arranged in the circumferential direction may be replaced with a permanent magnet that is comprised of one member and that is magnetized to have alternately different magnetic poles in the circumferential direction, such as an annular ring magnet, or a plastic magnet. In this case, the permanent magnet comprised of one member in the circumferential direction may also be comprised of one member in the axial direction, such that the permanent magnet may be entirely comprised of one member. In addition, the permanent magnet comprised of one member in the circumferential direction may be separated into a plurality of members in the axial direction, as in the case of the plurality of permanent magnets 12. Further, when a plastic magnet comprised of one member in the circumferential direction is employed, the rotor core 11 may be omitted.

The rotary shaft member 13 has, for example, a substantially columnar shape, and is disposed such that the rotation axis AX of the electric motor 400 coincides with the axis of the columnar shape. The rotary shaft member 13 is rotatably supported by, for example, bearings 25 and 32 (see FIG. 1 and the like) that are provided at both axial ends of an insertion member 24. As will be described later, the insertion member 24 is fixed to the fixing member 30. With this configuration, the rotary shaft member 13 can rotate about the rotation axis AX with respect to the fixing member 30. For example, the rotary shaft member 13 is coupled to the rotor core 11 via the coupling member 14 at an axial end (hereinafter referred to as a "distal end of the electric motor 400" for the sake of convenience) of the electric motor 400, which is opposite to an axial end (hereinafter referred to as a "proximal end of the electric motor 400" for the sake of convenience) on the fixing member 30 side of the electric motor 400.

The coupling member 14 may have, for example, a substantially disk shape that closes a substantially cylindrical open end of the rotor core 11. With this configuration, the rotor core 11 and the plurality of permanent magnets 12, which are fixed to the inner circumferential surface of the rotor core 11, can rotate about the rotation axis AX of the electric motor 400 with respect to the fixing member 30 in accordance with the rotation of the rotary shaft member 13.

As illustrated in FIG. 1, the coupling member 14 is fixed within the recess of the turbofan 300, that is, the coupling member 14 is fixed to the back side of the turbofan 300 opposite to the front side facing the opening 120A. Therefore, the turbofan 300 can rotate in accordance with the rotation of the rotor 10.

Note that the turbofan 300 may be fixed to the radially outer side surface of the rotor core 11 instead of being fixed to the coupling member 14 of the rotor 10. That is, instead of being fixed to one axial end portion of the rotor 10, the turbofan 300 may be fixed to the radially outer end portion of the rotor 10. In this case, a portion of the turbofan 300 facing the coupling member 14, that is, a portion corresponding to the bottom of the recess, projecting toward the opening 120A, of the turbofan 300 may be omitted, and the coupling member 14 may be exposed so as to be visible when viewed from the opening 120A side.

As illustrated in FIG. 3, the stator (hereinafter also referred to as a "stator") 20 is disposed radially inward of the rotor 10 (that is, the rotor core 11 and the permanent magnets 12). The stator 20 includes a plurality of (in this example, three) claw pole stator units (hereinafter simply referred to as "stator units") 21, a plurality of (in this example, two) interphase members 22, an end member 23, and the insertion member 24.

As illustrated in FIG. 4 and FIG. 5, each of the stator units 21 includes a pair of stator cores 211 and a winding 212.

The pair of stator cores (hereinafter also referred to as "stator cores") 211 (an example of an "iron core") is provided so as to surround the winding 212. Each of the stator cores 211 is formed of, for example, a steel plate, cast iron, a magnetic powder core, or the like. Each of the stator cores 211 includes a yoke 211A, a plurality of claw magnetic poles 211B, a yoke 211C, and a through-hole 211D.

The yoke 211A has an annular shape in an axial view, and has a predetermined thickness in the axial direction.

The plurality of claw magnetic poles 211B are arranged at equal intervals in the circumferential direction on the outer circumferential surface of the yoke 211A. The plurality of claw magnetic poles 211B protrude radially outward from the outer circumferential surface of the yoke 211A. Each of the claw magnetic poles 211B includes a claw magnetic pole portion 211B1.

The claw magnetic pole portion 211B1 has a predetermined width, and protrudes from the outer circumferential surface of the yoke 211A by a predetermined length.

Each of the claw magnetic poles 211B further includes a claw magnetic pole portion 211B2. With this configuration, a relatively large area where magnetic pole surfaces of the claw magnetic poles 211B, magnetized by the armature current of the winding 212, and the rotor 10 face each other, can be ensured. Therefore, the torque of the electric motor 400 can be relatively increased, and the output of the electric motor 400 can be improved.

The claw magnetic pole portion 211B2 protrudes by a predetermined length in the axial direction from the tip of the claw magnetic pole portion 211B1 toward the other stator core of the pair of stator cores 211. For example, as illustrated in FIG. 4, the claw magnetic pole portion 211B2 has a constant width, regardless of the distance from the claw magnetic pole portion 211B1. For example, as illustrated in FIG. 5, the claw magnetic pole portion 211B2 may have a tapered shape in which the width thereof decreases as the distance from the claw magnetic pole portion 211B1 increases in the axial direction.

Note that the claw magnetic pole portion 211B2 may be omitted.

The yoke 211C is configured such that a portion of the yoke 211C, in proximity to the inner circumferential surface of the yoke 211A, protrudes by a predetermined amount toward the other stator core of the pair of stator cores 211. For example, the yoke 211C has an annular shape having a smaller outer diameter than that of the yoke 211A in an axial view. With this configuration, yokes 211C of the respective stator cores 211 contact each other, and a space, in which the winding 212 is accommodated, is formed between yokes 211A of the respective stator cores 211.

The insertion member 24 is inserted through the through-hole 211D. The through-hole 211D is defined by the inner circumferential surfaces of corresponding yokes 211A and 211C.

The winding (hereinafter also referred to as a "coil") 212 is wound in an annular shape in an axial view. One end of the winding 212 is electrically connected to an external terminal, and the other end of the winding 212 is electrically connected to a neutral point or an external terminal. The winding 212 is disposed, in the axial direction, between the stator cores 211 (yokes 211A). The winding 212 is wound such that an inner circumferential portion of the winding 212 is located radially outward relative to the yokes 211C of the stator cores 211.

As illustrated in FIG. 4 and FIG. 5, the stator cores 211 are combined such that claw magnetic poles 211B of one of the pair of stator cores 211 and claw magnetic poles 211B of the other stator core 211 are alternately arranged in the circumferential direction. When an armature current flows through the annular winding 212, the claw magnetic poles 211B of the one stator core 211 of the pair of stator cores 211 and the claw magnetic poles 211B of the other stator core 211 are magnetized to have different magnetic poles. With this configuration, the claw magnetic poles 211B, protruding from the one stator core 211 of the pair of stator cores 211, are adjacent to the claw magnetic poles 211B protruding from the other stator core 211 in the circumferential direction, and have a different magnetic pole from that of the claw magnetic poles 211B protruding from the other stator core 211. Therefore, when an armature current flows through the winding 212, the N-pole claw magnetic poles 211B and the S-pole claw magnetic poles 211B are alternately disposed in the circumferential direction of the pair of stator cores 211.

As illustrated in FIG. 3, the plurality of stator units 21 are stacked in the axial direction.

The plurality of stator units 21 includes stator units 21 of multiple phases (in this example, three phases). Specifically, the plurality of stator units 21 includes a U-phase stator unit 21A, a V-phase stator unit 21B, and a W-phase stator unit 21C. The U-phase stator unit 21A, the V-phase stator unit 21B, and the W-phase stator unit 21C, of the plurality of stator units 21, are stacked in this order when viewed from the distal end side of the electric motor 400. The stator units 21A to 21C are offset by an electric angle of 120° in the circumferential direction.

Note that the electric motor 400 may be driven in accordance with armature currents of two phases, or may be driven in accordance with armature currents of four or more phases.

Each of the interphase members 22 is provided between stator units 21 of different phases, and the stator units 21 of the different phases are adjacent to each other in the axial direction. Each of the interphase members 22 is, for example, a member that is made of a non-magnetic material. With this configuration, a predetermined distance is secured between two stator units 21 of different phases, and thus magnetic flux leakage between the two stator units 21 of the different phases can be reduced. The interphase members 22 include a U-V interphase member 22A and a V-W interphase member 22B.

The U-V interphase member 22A is provided between the U-phase stator unit 21A and the V-phase stator unit 21B that are adjacent to each other in the axial direction. The U-V interphase member 22A has a substantially columnar shape (substantially disk shape) having a predetermined thickness, for example, and a through-hole through which the insertion member 24 is inserted is formed in the center of the U-V interphase member 22A. In the following, the same configuration may be applied to the V-W interphase member 22B.

The V-W interphase member 22B is provided between the V-phase stator unit 21B and the W-phase stator unit 21C that are adjacent to each other in the axial direction.

The end member 23 is provided on the end portion of a stator unit 21 situated on the distal end side of the electric motor 400, from among the plurality of stacked stator units 21. Specifically, the end member 23 is provided in contact with one axial end surface of the stator unit 21A opposite to the other axial end surface facing the stator unit 21B. The end member 23 has a substantially columnar shape (substantially disk shape) having a predetermined thickness, for example, and a through-hole through which the insertion member 24 is inserted is formed in the center of the end member 23. The end member 23 is, for example, a member that is made of a non-magnetic material. With this configuration, magnetic flux leakage from the stator unit 21A (specifically, a stator core 211 provided on the distal end side of the electric motor 400) can be reduced.

The tip end of the insertion member 24 is fixed to the fixing member 30 in a state in which the insertion member 24 is inserted through the end member 23, the stator unit 21A, the U-V interphase member 22A, the stator unit 21B, the V-W interphase member 22B, and the stator unit 21C in this order when viewed from the distal end side of the electric motor 400. The insertion member 24 has, for example, an external thread at the tip end. The insertion member 24 is fixed to the fixing member 30 by fitting the external thread to a corresponding internal thread of the fixing member 30.

Further, the insertion member 24 has, for example, a substantially cylindrical shape, and is disposed such that the rotary shaft member 13 is rotatably disposed in a hole formed by the inner circumferential surface of the insertion member 24. The bearing 25 is provided at the end of the insertion member 24 and rotatably supports the rotary shaft member 13 on the distal end side of the electric motor 400.

Further, the insertion member 24 has, on the distal end side of the electric motor 400, a head having a relatively larger outer diameter than the inner diameter of the through-hole 211D in the stator unit 21. With this configuration, for example, by tightening the insertion member 24 to the fixing member 30 to some extent, a force in a direction from the head of the insertion member 24 to the fixing member 30 can act on the end member 23 in the axial direction. Therefore, the plurality of stator units 21 (the stator units 21A to 21C) and the interphase members 22 (the U-V interphase member 22A and the V-W interphase member 22B) can be fixed to the fixing member 30 so as to be sandwiched between the end member 23 and the fixing member 30. Thus, the stator units 21A to 21C can be fixed in such a manner that the compressive stress acts on stator cores 211. In particular, a magnetic powder core has relatively low strength with respect to tensile stress while having relatively high strength with respect to compressive stress. Therefore, even if the stator cores 211 are formed of magnetic powder cores, the stator units 21A to 21C can be fixed in a more appropriate manner in terms of strength.

As illustrated in FIG. 1, the fixing member 30 is secured to the bottom plate 110 by the plurality of bolts 34 as described above. In this manner, the electric motor 400 is fixed to the bottom plate 110. Further, a predetermined gap is provided between the fixing member 30 and the bottom plate 110, and an anti-vibration member (for example, anti-vibration rubber) is interposed between the fixing member 30 and the bottom plate 110. The anti-vibration member may be tightened together with the fixing member 30 by, for example, the bolts 34.

The fixing member 30 (an example of a support member) has, for example, a substantially disk shape having a larger outer diameter than that of the rotor 10 (rotor core 11) in an axial view, and has a predetermined thickness in the axial direction. The rotor 10 is rotatably supported by the fixing member 30 via the insertion member 24, and the stator 20 is fixed to the fixing member 30 as described above.

Further, as illustrated in FIG. 1, the fixing member 30 is provided with the bearing 32 that rotatably supports the rotary shaft member 13 on the proximal end side of the electric motor 400.

### <Method of Cooling Electric Motor>

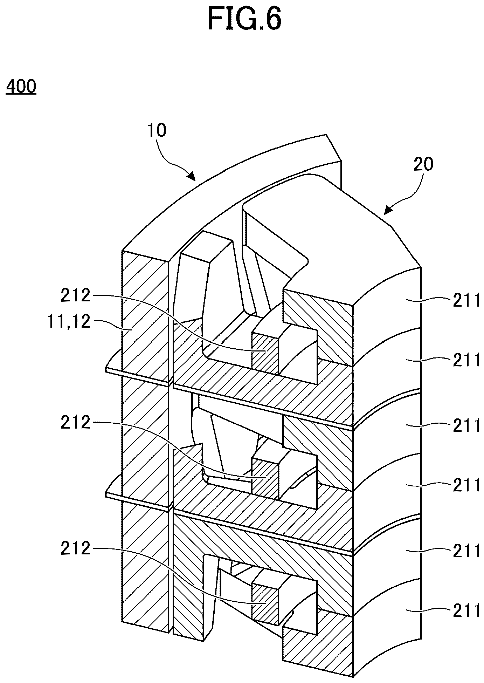

Next, a method of cooling the electric motor 400 according to the first embodiment will be described with reference to FIG. 6 in addition to FIG. 1 through FIG. 5.

FIG. 6 is a perspective view of a vertical cross-section illustrating an example of an internal structure of the electric motor 400 according to the present embodiment.

As illustrated in FIG. 1, through holes 14A (an example of a hole) are provided in the coupling member 14 of the rotor 10 so as to penetrate from a space on the inside of the rotor 10 to a space on the outside of the rotor 10. The stator 20 is disposed on the inside of the rotor 10 and the turbofan 300 is fixed to the outside of the rotor 10. One or more through-holes 14A may be provided. In this example (FIG. 1), a plurality of through-holes 14A are provided in the circumferential direction around the rotation axis AX of the coupling member 14.

In an axial view, each of the through-holes 14A overlaps at least a portion, where no claw magnetic pole 211B (claw magnetic pole portion 211B1) is provided, of the stator core 211 situated on the distal end side of the electric motor 400.

In addition, through-holes 302 are provided in the turbofan 300 so as to penetrate from the front surface visibly exposed through the opening 120A to the back surface to which the coupling member 14 of the electric motor 400 is attached. The through-holes 302 are provided so as to be in communication with the through-holes 14A. Accordingly, the inner space of the rotor 10 where the stator 20 is provided (that is, the space surrounded by the rotor 10 and the fixing member 30) is in communication with the low-pressure space LP such that air can move through the spaces.

Note that if the turbofan 300 is fixed to the radially outer side surface of the rotor 10 and the one end portion of the rotor 10 is exposed to the low-pressure space LP without being covered by the turbofan 300, the through-holes 14A can be in communication with the low-pressure space LP without the through-holes 302.

In addition, a gap 36 (an example of an inflow path) is provided between the fixed member 30 and the other axial end portion opposite to one axial end portion, fixed to the coupling member 14, of the rotor 10 (the rotor core 11 and the permanent magnets 12). This is because the rotor 10 rotates with respect to the fixing member 30. With this configuration, the inner space of the rotor 10 where the stator 20 is provided can be in communication with the high-pressure space HP such that air can move through the spaces.

Further, as illustrated in FIG. 4 through FIG. 6, the pair of stator cores 211 of each of the stator units 21 is combined such that claw magnetic pole portions 211B2 of one of the pair of stator cores 211 and claw magnetic pole portions 211B2 of the other stator core 211 are alternately arranged in the circumferential direction. Further, a predetermined gap is provided between adjacent claw magnetic pole portions 211B2. Therefore, spaces radially outward of the stator units 21 (stator cores 211) are in communication with spaces in which windings 212 are accommodated between two corresponding stator cores 211 (hereinafter referred to as "inner spaces of the stator units 21" for the sake of convenience) such that air can move through the spaces.

Further, in an axial view, the pair of stator cores 211 of each of the stator units 21 are combined such that claw magnetic poles 211B (claw magnetic pole portions 211B1) of one of the pair of stator cores 211 and claw magnetic poles 211B (claw magnetic pole portions 211B1) of the other stator core 211 are alternately arranged in the circumferential direction. Therefore, by appropriately setting the shape of the end member 23 in an axial view, spaces axially outward of the stator units 21 and inner spaces of the stator units 21A and 21C disposed at the axial ends are in communication with each other such that air can move through the spaces. Specifically, the end member 23 is disposed to have regions that overlap portions, where no claw magnetic pole 211B (claw magnetic pole portion 211B1) is provided, of the adjacent stator core 211 in an axial view. Similarly, by appropriately setting the shapes of the U-V interphase member 22A and the V-W interphase member 22B, the inner spaces of the plurality of stacked stator units 21 are in communication with each other such that air can move between adjacent stator units 21. Specifically, each of the U-V interphase member 22A and the V-W interphase member 22B may have a through-hole that extends through portions, where no claw magnetic pole 211B (claw magnetic pole portion 211B1) is provided, of two adjacent stator cores 211.

As described, the gap 36 located radially outward relative to the stator 20 is in communication with the through-holes 14A of the coupling member 14 and the through-holes 302 of the turbofan 300, which are located axially outward relative to the stator 20, such that air can move through the inner spaces of the plurality of stator units 21. That is, air can move between the high-pressure space HP and the low-pressure space LP through the gap 36, the inner space of the rotor 10, the through-holes 14A, and the through-holes 302. Accordingly, as illustrated in FIG. 1 (dotted arrows), while the electric motor 400 is in operation, air in the high-pressure space HP flows into the inner space of the rotor 10 through the gap 36. Then, the air that has flowed into the rotor 10 passes axially through each of the inner spaces of the plurality of stator units 21, and flows out through the through-holes 14A and the through-holes 302 into the low-pressure space LP.

In the case of the electric motor 400 that is of an outer rotor type according to the present embodiment, the stator 20 including the windings 212 is disposed radially inward of the electric motor 400. Therefore, heat would tend to build up within the electric motor 400.

Conversely, in the first embodiment, the windings 212 provided inward of the stator units 21 can be cooled by the flow of air that flows from the gap 36 into the inner space of the rotor 10, passes through the inner spaces of the stator units 21, and is discharged from the through-holes 14A and the through-holes 302. Accordingly, the cooling efficiency of the electric motor 400 can be improved. Further, if sufficient cooling efficiency is obtained, an additional cooling structure such as a heat sink does not need to be provided, and even if sufficient cooling efficiency is not obtained, the size of an additional cooling structure such as a heat sink can be minimized. Therefore, an increase in size of the electric motor 400 can be prevented.

### [Second Embodiment]

Next, a second embodiment will be described. In the following description, a basic configuration of an electric motor 400 is the same as that of the above-described first embodiment. Therefore, portions that differ from those described in the first embodiment will be mainly described by referring to FIG. 2 through FIG. 5. The description of the same or corresponding components as those described in the first embodiment may be simplified or omitted.

### <Method of Cooling Electric Motor>

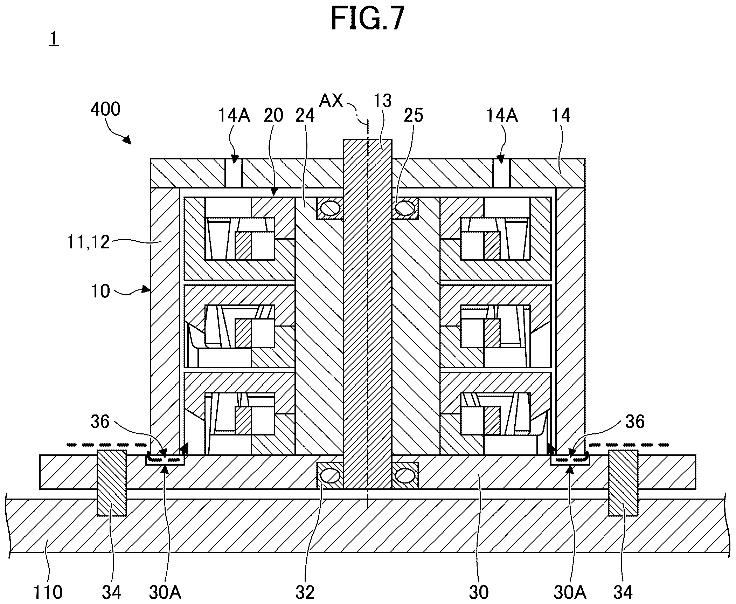

A method of cooling the electric motor 400 according to the second embodiment will be described with reference to FIG. 7.

FIG. 7 is a vertical cross-sectional view schematically illustrating an example of the indoor unit 1 of the air conditioner including the electric motor 400 according to the second embodiment.

In the second embodiment, except for the electric motor 400, configurations (for example, the housing 100, the heat exchanger 200, the turbofan 300, and the like) of the indoor unit 1 of the air conditioner may be the same as those of the first embodiment. Therefore, in FIG. 7, a configuration of the electric motor 400 and its vicinity will be mainly depicted, and the top plate 120, the bell mouth 130, the heat exchanger 200, the turbofan 300, and the like of the indoor unit 1 are not depicted.

As illustrated in FIG. 7, in the second embodiment, the fixing member 30 has a groove 30A.

The groove 30A is provided over a part of or the entirety of the electric motor 400 in the circumferential direction around the rotation axis AX so as to be positioned under all of the rotor core 11 and the permanent magnets 12 that are arranged in the radial direction around the rotation axis AX. Accordingly, the gap 36 between the fixing member 30 and the other axial end portion opposite to one axial end portion, fixed to the coupling member 14, of the rotor 10 (the rotor core 11 and the permanent magnets 12) can be made relatively large. Therefore, while the electric motor 400 is in operation, the flow rate of air (see dotted arrows in FIG. 7) flowing into the inner space of the rotor 10 through the gap 36 can be relatively increased. As a result, the cooling efficiency of the electric motor 400 can be further improved.

### [Third Embodiment]

Next, a third embodiment will be described. In the following description, a basic configuration of an electric motor 400 is the same as that of the above-described first embodiment. Therefore, portions that differ from those described in the first embodiment will be mainly described by referring to FIG. 2 through FIG. 5. The description of the same or corresponding components as those described in the first embodiment may be simplified or omitted.

### <Method of Cooling Electric Motor>

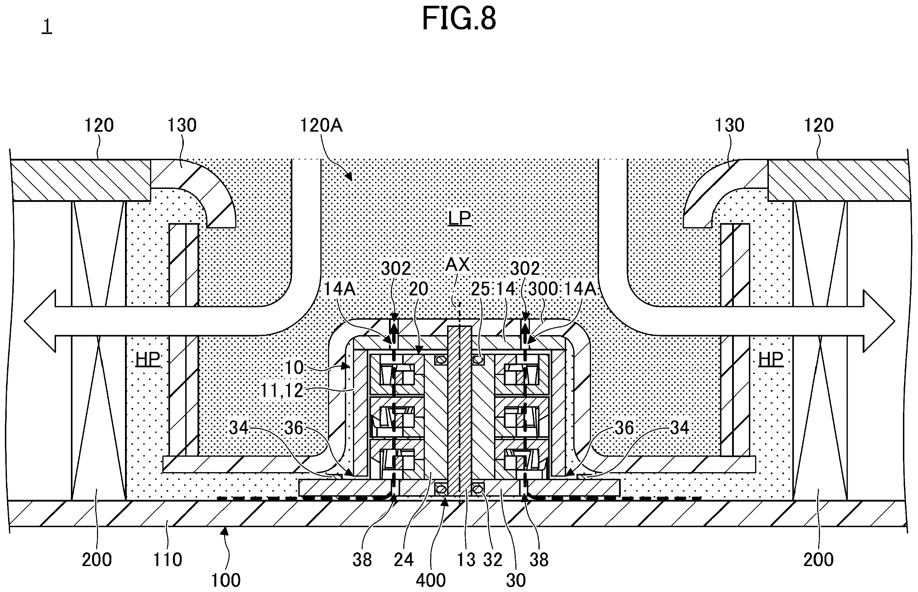

A method of cooling the electric motor 400 according to the third embodiment will be described with reference to FIG. 8.

FIG. 8 is a vertical cross-sectional view illustrating an example of the indoor unit 1 of the air conditioner including the electric motor 400 according to the third embodiment.

In the third embodiment, except for the electric motor 400, configurations (for example, the housing 100, the heat exchanger 200, the turbofan 300, and the like) of the indoor unit 1 of the air conditioner may be the same as those of the first embodiment and the like, and thus, the description thereof will be omitted.

As illustrated in FIG. 8, in the third embodiment, the fixing member 30 has a through-hole 38.

The through-hole 38 is provided under a position where the stator unit 21C is provided along the radial direction around the rotation axis AX. Further, the through-hole 38 is provided such that an opening on the stator unit 21C side of the through-hole 38 overlaps at least a portion, where no claw magnetic pole 211B (claw magnetic pole portion 211B1) is provided, of a stator core 211 that is adjacent to the fixing member 30 in an axial view. Accordingly, the through-hole 38 can cause the inner space of the stator unit 21C to be in communication with a space between the fixing member 30 and the bottom plate 110, that is, the high-pressure space HP, such that air can move through the spaces. Therefore, as illustrated in FIG. 8 (dotted arrows), while the electric motor 400 is in operation, air in the high-pressure space HP flows into the inner space of the rotor 10 through the through-hole 38 in addition to the gap 36. Then, the air that has flowed into the inner space of the rotor 10 passes axially through each of the inner spaces of the plurality of stator units 21, and flows out through the through-holes 14A and the through-holes 302 into the low-pressure space LP. Therefore, the flow rate of air introduced into the inner space of the rotor 10 can be increased, and thus, the cooling efficiency of the electric motor 400 can be further improved.

Further, the air flowing into the inner space of the rotor 10 flows from the through-hole 38 axially into the stator unit 21C situated on the proximal end of the electric motor 400. Therefore, the air can easily come into contact with the winding 212 of the stator unit 21C, and the cooling efficiency of the stator unit 21C can be improved. Accordingly, the cooling efficiency of the entire electric motor 400 can be further improved.

### [Fourth Embodiment]

Next, a fourth embodiment will be described. In the following description, a basic configuration of an electric motor 400 is the same as that of the above-described first embodiment. Therefore, portions that differ from those described in the first embodiment will be mainly described by referring to FIG. 2 through FIG. 5. The description of the same or corresponding components as those described in the first embodiment may be simplified or omitted.

### <Method of Cooling Electric Motor>

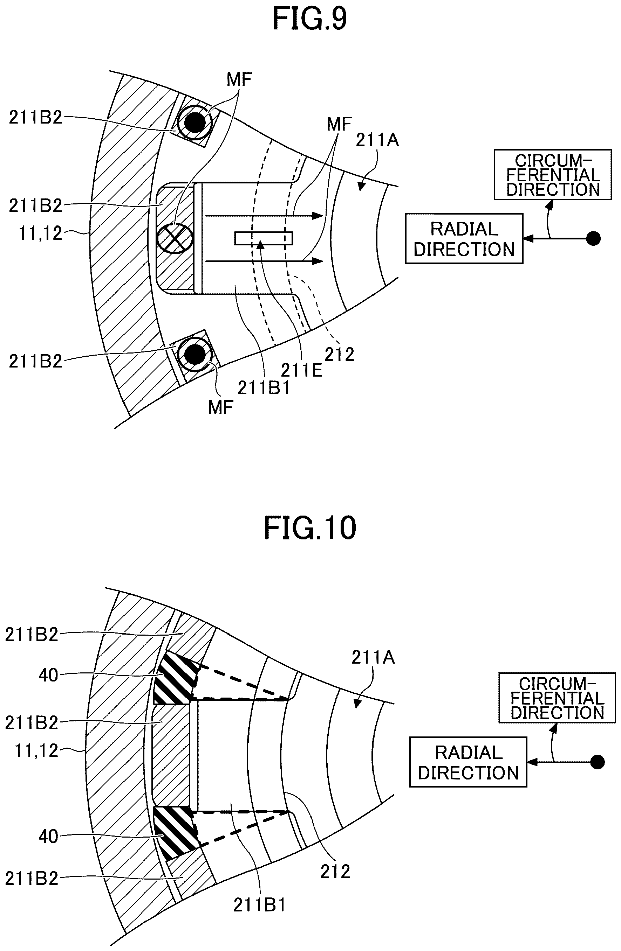

A method of cooling the electric motor 400 according to the fourth embodiment will be described with reference to FIG. 9.

FIG. 9 is a horizontal cross-sectional view illustrating an example of the electric motor 400 according to the fourth embodiment. In FIG. 9, the winding 212 is indicated by a dotted line such that a through-hole 211E is easily visible.

In the fourth embodiment, except for the electric motor 400, configurations (for example, the housing 100, the heat exchanger 200, the turbofan 300, and the like) of the indoor unit 1 of the air conditioner may be the same as those of the first embodiment and the like. Thus, the indoor unit 1 of the air conditioner including the electric motor 400 according to the fourth embodiment is not depicted in FIG. 9.

As illustrated in FIG. 9, in the fourth embodiment, a through-hole 211E is provided in the claw magnetic pole portion 211B1.

The through-hole 211E is provided axially through the claw magnetic pole portion 211B1. Further, the through-hole 211E overlaps a portion of the winding 212 in an axial view. Accordingly, air introduced into the inner space of the rotor 10 through the gap 36 can flow into the inside of each of the stator units 21 while passing through the through-hole 211E. Therefore, the air can directly come into contact with the winding 212 through the through-hole 211E. As a result, the cooling efficiency of the electric motor 400 can be further improved.

Further, the through-hole 211E is provided so as to extend in the radial direction in an axial view, and the circumferential length of an opening of the through-hole 211E is relatively greater than the radial length of the opening. Accordingly, the cross-sectional area of the through-hole 211E in the claw magnetic pole portion 211B1 can be decreased in a radial view. Therefore, the influence of the through-hole 211E on a magnetic flux MF flowing in the radial direction can be reduced in each of the stator cores 211, and also, the cooling efficiency of the electric motor 400 can be improved.

### [Fifth Embodiment]

Next, a fifth embodiment will be described. In the following description, a basic configuration of an electric motor 400 is the same as that of the above-described first embodiment. Therefore, portions that differ from those described in the first embodiment will be mainly described by referring to FIG. 2 through FIG. 5. The description of the same or corresponding components as those described in the first embodiment may be simplified or omitted.

### <Method of Cooling Electric Motor>

A method of cooling the electric motor 400 according to the fifth embodiment will be described with reference to FIG. 10.

FIG. 10 is a horizontal cross-sectional view illustrating an example of the electric motor 400 according to the fifth embodiment.

In the fifth embodiment, except for the electric motor 400, configurations (for example, the housing 100, the heat exchanger 200, the turbofan 300, and the like) of the indoor unit 1 of the air conditioner may be the same as those of the first embodiment and the like. Thus, the indoor unit 1 of the air conditioner including the electric motor 400 according to the fifth embodiment is not depicted in FIG. 9.

As illustrated in FIG. 10, in the fifth embodiment, a spacer 40 is provided between and in contact with claw magnetic pole portions 211B2 that are adjacent to each other in the circumferential direction of each of the stator units 21 (pair of stator cores 211). The spacer 40 is provided along the entire circumference of each of the stator units 21.

The spacer 40 (an example of a resistance member) is, for example, a member that is made of a non-magnetic material, and is used to position the pair of stator cores of the stator unit 21. The spacer 40 includes, for example, an annular inner circumferential portion and an outer circumferential portion. The inner circumferential portion contacts the radial inner surfaces of claw magnetic pole portions 211B2 and the axial inner surfaces of claw magnetic pole portions 211B1, and the outer circumferential portion projects from the inner circumferential portion toward each space between claw magnetic pole portions 211B2 that are adjacent to each other in the circumferential direction. Accordingly, the flow path resistance of the outer end portion of each of the stator units 21 relatively increases. Thus, for example, air introduced into the inner space of the rotor 10 through the gap 36 flows inside the stator units 21 while passing through spaces further radially inward (for example, areas surrounded by dotted lines in FIG. 10). Therefore, in the stator units 21, air can easily come into contact with the windings 212 arranged relatively inward, and thus, the cooling efficiency of the electric motor 400 can be further improved.

### [Sixth Embodiment]

Next, a sixth embodiment will be described.

The configuration of the above-described first to fifth embodiments may be combined as appropriate.

Specifically, at least two of the groove 30A of the second embodiment, the through-hole 38 of the third embodiment, the through-hole 211E of the fourth embodiment, and the spacer 40 of the fifth embodiment may be combined with the electric motor 400 of the first embodiment as appropriate.

Accordingly, the cooling efficiency of the electric motor 400 can be further improved.

### [Another Embodiment]

Next, another embodiment will be described. In the following description, a basic configuration of an electric motor 400 is the same as that of the above-described first embodiment. Therefore, portions that differ from those described in the first embodiment will be mainly described by referring to FIG. 2 through FIG. 5. The description of the same or corresponding components as those described in the first embodiment may be simplified or omitted.

The groove 30A provided in the fixing member 30 of the above-described second embodiment may be used for purposes other than improving the cooling efficiency of the electric motor 400. In the following, the usage of the groove 30A will be described.

### <Example of Usage of Groove>

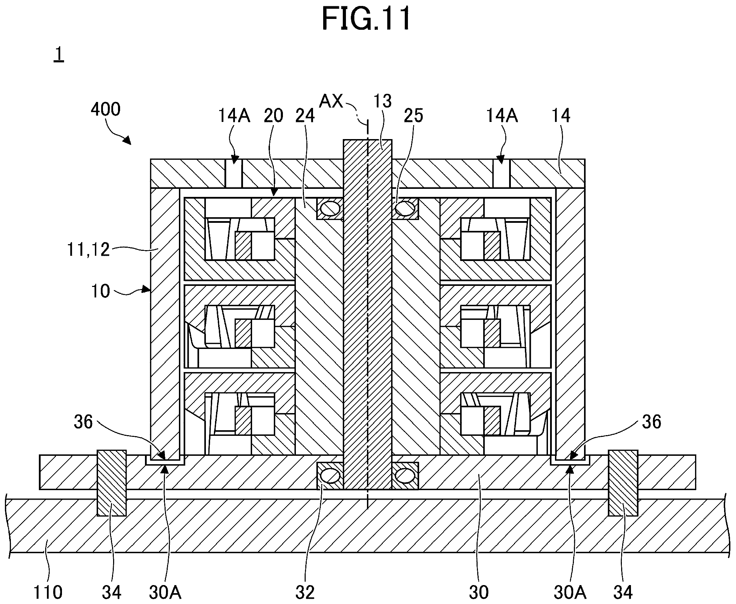

First, an example of the usage of the groove 30A will be described with reference to FIG. 11.

FIG. 11 is a vertical cross-sectional view of an example of the electric motor 400 according to the other embodiment.

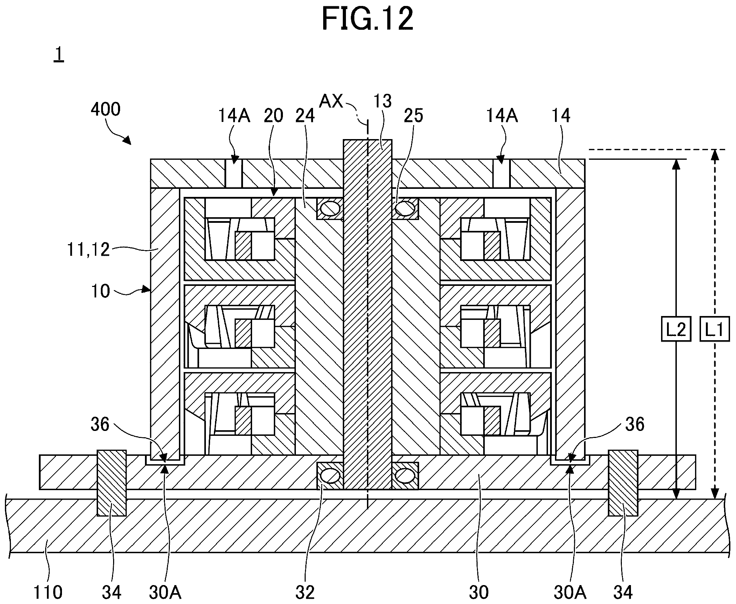

In this example, except for the electric motor 400, configurations (for example, the housing 100, the heat exchanger 200, the turbofan 300, and the like) of the indoor unit 1 of the air conditioner may be the same as those of the first embodiment. Therefore, in FIG. 11, a configuration of the electric motor 400 and its vicinity will be mainly depicted, and the top plate 120, the bell mouth 130, the heat exchanger 200, the turbofan 300, and the like of the indoor unit 1 of the air conditioner are not depicted. The same applies to FIG. 12 as will be described later.

As illustrated in FIG. 11, in this example, the groove 30A is provided in the fixing member 30 as in the second embodiment described above.

In this example, the axial lengths of the rotor core 11 and the permanent magnets 12 of the rotor 10 are greater than those of the above-described second embodiment, and the axial ends of the rotor core 11 and the permanent magnets 12 are inserted into the groove 30A. Accordingly, the amount of the permanent magnets 12 can be relatively increased.

For example, as compared to when the groove 30A is not provided (for example, in the above-described first embodiment), the rotor core 11 and the permanent magnets 12 can be increased in length in the axial direction, and the increased length of each of the rotor core 11 and the permanent magnets 12 may be approximately the same as the depth of the groove 30A or may be less than the depth of the groove 30A. In the former case in which the increased length is approximately the same as the depth, the amount of permanent magnets 12 can be given priority and can be thus maximized. In the latter case in which the increased length is less than the depth, while the amount of the permanent magnets 12 can be relatively increased, the cooling efficiency of the electric motor 400 can also be further improved.

### <Another Example of Usage of Groove>

Next, another example of the usage of the groove 30A will be described with reference to FIG. 12.

FIG. 12 is a vertical cross-sectional view of an example of an electric motor 400 according to another embodiment.

As illustrated in FIG. 12, in this example, the groove 30A is provided in the fixing member 30 as in the second embodiment described above.

As compared to the above-described second embodiment, the fixing member 30 in this example is moved closer to the fixing member 30 in the axial direction, and the axial ends of the rotor core 11 and the permanent magnets 12 are inserted into the groove 30A. Accordingly, for example, the axial length of the electric motor 400 can be made relatively smaller than that of the above-described second embodiment (in FIG. 12, L1 denotes the length of the electric motor 400 of the second embodiment and L2 denotes the length of the electric motor 400 of this example).

For example, as compared to when the groove 30A is not provided (for example, in the above-described first embodiment), the electric motor 400 can be decreased in length in the axial direction, and the decreased length of the electric motor 400 may be approximately the same as the depth of the groove 30A or may be less than the depth of the groove 30A. In the former case in which the decreased length is the same as the depth, the size in the axial direction of the electric motor 400 can be given priority, and thus, the axial length of the electric motor 400 can be minimized. In the latter case in which the decreased length is less than the depth, while the size in the axial direction of the electric motor 400 can be reduced, the cooling efficiency of the electric motor 400 can also be further improved.

Note that the axial length of the stator 20 may be the same as that of the above-described first embodiment as long as a gap in the axial direction between the coupling member 14 of the rotor 10 and the stator 20 can be secured. The axial length of the stator 20 may be decreased in accordance with the axial movement of the rotor 10 toward the fixing member 30.

### [Effects]

Next, effects of the electric motor 400 according to each of the above-described embodiments will be described.

In each of the embodiments (first to sixth embodiments), the electric motor 400 includes the rotor 10 and the stator 20. Specifically, the rotor 10 is configured to be rotatable about the rotation axis AX and the turbofan 300 is fixed to the rotor 10. The stator 20 is disposed radially inward of the rotor 10 and includes the claw pole stator units 21. Each of the claw pole stator units 21 includes the winding 212 that is wound in an annular shape around the rotation axis AX and the pair of stator cores 211 that surrounds the winding 211. The through-holes 14A are provided in one end portion of the rotor 10 so as to penetrate from the inside to the outside of the rotor 10. The stator 20 is provided in the inside and the turbofan 300 is fixed to the outside of the rotor 10. The inflow path is configured to cause a surrounding fluid to flow into the inside of the stator unit 21C (so as to come into contact with the surface of the winding 212). The stator unit 21C is provided at one other end portion of the electric motor 400, which is opposite to the one end portion of the rotor 10 in the axial direction.

Accordingly, air in the high-pressure space HP can flow through the inflow path into the inside of the stator unit 21C provided at the one other end portion, and flow out through the through-holes 14A of the one end portion into the low-pressure space LP. Accordingly, the winding 212 can be cooled by creating the flow of air inside the stator units 21, each including the winding 212 therein, from the other end portion to one end portion of the stator 20 disposed inward of the rotor 12. Therefore, the cooling performance of the electric motor 400 can be improved, and thus, a heat sink or the like for cooling the electric motor 400 is not required. Alternatively, even if a heat sink or the like is required, the size of the heat sink or the like can be minimized. Accordingly, an increase in size of the electric motor 400 can be minimized.

Note that the electric motor 400 may rotatably drive a fluid drive unit other than the turbofan 300. The electric motor 400 may rotatably drive a fluid drive unit configured to drive a fluid other than air. The electric motor 400 exhibits the same effects in this case as well.

In each of the embodiments (first to sixth embodiments), the turbofan 300 may have the through-holes 302 that penetrate from the front surface exposed through the low-pressure space LP to the back surface that is fixed to the stator 20. The through-holes 14A of the rotor 10 (coupling member 14) may be in communication with the through-holes 302.

Accordingly, even if the surface of the one end portion (coupling member 14) of the rotor 10 is covered by the fluid drive unit (turbofan 300), the through-holes 14A can be in communication with the low-pressure space LP through the through-holes 302.

In each of the embodiments (first to sixth embodiments), the fixing member 30 supports the stator 20 at the one other end portion (that is, at the proximal end of the electric motor 400). The inflow path configured to cause a fluid to flow into the inside of the stator unit 21 may include the gap 36 between the rotor 10 and the fixing member 30.

Accordingly, specifically, air in the high-pressure space HP can be introduced from the gap 36 into the stator units 21, pass through the stator units 21, and flow out through the through-holes 14A into the low-pressure space LP.

Further, in the embodiment (third embodiment), the fixing member 30 supports the stator 20 at the other end portion (at the proximal end of the electric motor 400). The inflow path configured to cause a fluid to flow into the inside of the stator unit 21 includes the through-hole 38 provided in the fixing member 30.

Accordingly, specifically, air in the high-pressure space HP can be introduced from the through-hole 38 into the stator units 21, pass through the stator units 21, and flow out through the through-holes 14A into the low-pressure space LP. Further, air introduced into the inner space of the rotor 10 flows from the through-hole 38 axially into the stator unit 21C situated on the proximal end of the electric motor 400. Therefore, the air can easily come into contact with the winding 212 of the stator unit 21C. Accordingly, the cooling efficiency of the electric motor 400 can be further improved.

Further, in the embodiment (fourth embodiment), each of the stator cores 211 has the through-hole 211E. The through-hole 211E extends axially through each of the stator cores 211 in the axial direction and overlaps at least a portion of the winding 212 in an axial view.

Accordingly, air introduced into the inside of the stator units 21 through the inflow path can move in the axial direction while passing through the through-hole 211E of each of the stator cores 211. Therefore, the air can directly come into contact with the winding 212 through the through-hole 211E. Accordingly, the cooling efficiency of the electric motor 400 can be further improved.

Further, in the embodiment (fourth embodiment), the opening of the through-hole 211E of each of the stator cores 211 extends substantially radially, and the circumferential length of the opening is relatively smaller than the radial length of the opening.

Accordingly, in a radial view, the cross-sectional area of the through-hole 211E in each of the stator cores 211 (claw magnetic pole portions 211B1) can be relatively decreased. Therefore, the influence of the through-hole 211E on a magnetic flux flowing in the radial direction can be reduced in each of the stator cores 211 (stator units 21) of the stator 20.

Further, in the embodiment (fifth embodiment), the spacer 40 configured to relatively increase the flow path resistance of the radially outer end portion of the stator 20 is provided.

Accordingly, air can easily pass by the winding 212 located radially inward relative to the outer end of the stator 20. Therefore, the air can easily come into contact with the winding 212, and the cooling efficiency of the electric motor 400 can be further improved.

Note that any resistance member other than the spacer 40 may be provided as long as the flow path resistance of the radially outer end portion of the stator 20 can be increased. The same effects can be exhibited in this case as well.

### [Modifications and Changes]

Although the embodiments have been described above, it will be understood that various changes in forms and details may be made therein without deviating from the spirit and scope of the claims.

For example, the electric motor 400 according to any of the above-described embodiments may be applied to an outside unit of the air conditioner, instead of being applied to the indoor unit 1 of the air conditioner.

This application is based on and claims priority to Japanese Patent Application No. 2020-101141, filed on June 10, 2020, the entire contents of which are incorporated herein by reference.

### DESCRIPTION OF THE REFERENCE NUMERALS

1 indoor unit of air conditioner
10 rotor
11, 11A to 11C rotor core
12 permanent magnet
13 rotary shaft member
14 coupling member
14A through-hole (hole)
20 stator
21, 21A to 21C claw pole stator unit
22 interphase member
22A UV interphase member
22B VW interphase member
23 end member
24 insertion member
25 bearing
30 fixing member (support member)
30A groove
32 bearing
34 bolt
36 gap (inflow path)
38 through-hole (inflow path)
40 spacer (resistance member)
100 housing
110 bottom plate
120 top plate
120A opening
200 heat exchanger
211 stator core (iron core)
211A yoke
211B claw magnetic pole
211C yoke
211D through-hole
211E through-hole
212 winding
300 turbofan (fluid drive unit)
400 electric motor
AX rotation axis

## Claims

1. An electric motor comprising:
a rotor configured to be rotatable about a rotation axis and to which a fluid drive unit is fixed;
a stator that is disposed inward of the rotor and includes claw pole stator units, the claw pole stator units each including a winding that is wound in an annular shape around the rotation axis and an iron core that surrounds the winding;
a hole that is provided in one end portion of the rotor so as to penetrate from inside to outside of the rotor, the stator being provided in the inside and the fluid drive unit being fixed to the outside of the rotor; and
an inflow path configured to cause a surrounding fluid to flow into inside of a stator unit, the stator unit being provided at one other end portion opposite to the one end portion in an axial direction.

2. The electric motor according to claim 1, wherein the fluid drive unit has a through-hole that penetrates from a front surface to a back surface thereof, the back surface being fixed to the stator, and
the hole is in communication with the through-hole.

3. The electric motor according to claim 1 or 2, further comprising a support member configured to support the stator at the one other end portion in the axial direction,
wherein the inflow path includes a gap between the rotor and the support member.

4. The electric motor according to any one of claims 1 to 3, further comprising a support member configured to support the stator at the one other end portion in the axial direction,
wherein the inflow path includes a through-hole provided in the support member.

5. The electric motor according to any one of claims 1 to 4, wherein the iron core has a through-hole extending axially through the iron core and overlapping at least a portion of the winding in an axial view.

6. The electric motor according to claim 5, wherein the through-hole of the iron core is provided such that an opening of the through-hole extends substantially radially and a circumferential length of the opening is relatively smaller than a radial length of the opening.

7. The electric motor according to any one of claims 1 to 6, further comprising a resistance member configured to relatively increase flow path resistance of a radially outer end portion of the stator.
